**Europäisches Patentamt**

**European Patent Office**

**Office européen des brevets**

(19)

(11) Numéro de publication: **0 235 042 B1**

(12)

# FASCICULE DE BREVET EUROPEEN

(45) Date de publication du fascicule du brevet:
**04.07.90**

(51) Int. Cl.⁵: **G06F 15/68, H04N 5/20**

(21) Numéro de dépôt: **87400403.9**

(22) Date de dépôt: **24.02.87**

(54) **Système d'imagerie numérique à réglage de l'échelle des gris, notamment pour la visualisation des vaisseaux sanguins.**

(30) Priorité: **28.02.86 FR 8602878**

(43) Date de publication de la demande:
**02.09.87 Bulletin 87/36**

(45) Mention de la délivrance du brevet:
**04.07.90 Bulletin 90/27**

(84) Etats contractants désignés:
**DE NL**

(56) Documents cités:
**FR-A- 2 555 003
GB-A- 2 129 635
US-A- 4 231 065**

(73) Titulaire: **GENERAL ELECTRIC CGR S.A., 100, rue
Camille-Desmoulins, F-92130 Issy les Moulineaux(FR)**

(72) Inventeur: **Klausz, Rémy, THOMSON-CSF
SCPI 19, avenue de Messine, F-75008 Paris(FR)**

(74) Mandataire: **Ballot, Paul Denis Jacques, Cabinet
Ballot-Schmit 7, rue le Sueur, F-75116 Paris(FR)**

ACTORUM AG

## Description

L'invention est relative à un système d'imagerie numérique à réglage de l'échelle des gris, notamment pour la visualisation des vaisseaux sanguins.

Dans une installation d'imagerie numérique telle que décrite dans le document GB-A 2 129 635 une image, le plus souvent de type radiologique, est composée de points à chacun desquels est affectée une valeur numérique représentant une intensité de rayonnement. La valeur numérique a une précision qui est celle des appareils de mesure; cette précision est en général telle qu'on peut représenter ladite valeur numérique par un nombre binaire à dix, onze ou douze bits.

Etant donné que l'oeil humain ne peut, pendant la journée (c'est-à-dire dans les meilleures conditions), distinguer qu'environ 1000 demi-teintes différentes entre l'éblouissement et le noir absolu à condition, d'ailleurs, que ces demi-teintes soient en des emplacements contigüs, une précision de 0,1 % sur la luminance est suffisante. Mais un tube cathodique ne peut restituer qu'environ 100 demi-teintes. Dans ces conditions la valeur de luminance affectée à chaque point lors de la reproduction est en général un nombre binaire d'au maximum huit bits (256 valeurs possibles), alors que les appareils de mesure permettent dix à douze bits.

Pour bénéficier, lors de la reproduction sur un écran de moniteur de télévision, de toute la précision de l'image numérique on effectue une opération généralement appelée "fenêtrage" qui consiste à ne retenir que des valeurs du signal de luminance comprises entre un minimum et un maximum, les valeurs comprises entre ces limites étant appelées une "fenêtre". Les valeurs du signal numérique qui se trouvent en-dehors de la fenêtre correspondent, d'une part, au noir (en général pour les valeurs plus faibles que la limite inférieure) et d'autre part au blanc (généralement pour les valeurs dépassant la limite supérieure de la fenêtre).

La fenêtre est habituellement modifiable à volonté par l'utilisateur en fonction de l'objet observé et de ce qu'il recherche dans cet objet. Par exemple pour l'observation d'un tissu humain par radiographie numérique une limite de la fenêtre correspond aux plus fortes absorptions dûes à l'os et une autre limite correspond aux plus faibles absorptions, à travers l'air ambiant.

Une fenêtre est définie par deux paramètres, le plus souvent la largeur L et le niveau moyen M. La largeur L de la fenêtre est la différence entre les deux limites tandis que le niveau moyen M est une valeur comprise entre ces deux limites qui donne une valeur de gris déterminée sur l'écran de visualisation. La largeur L influe sur le contraste tandis que le niveau moyen M représente la luminosité de l'image.

Le fenêtrage peut être effectué à l'aide d'une mémoire vive, appelée table d'équivalence, recevant sur son entrée d'adressage un signal représantant la valeur numérique de l'intensité du rayonnement en un point de l'image et le contenu de la case mémoire se trouvant à l'adresse correspondante est transmis à un moniteur de télévision par l'intermédiaire d'un convertisseur numérique-analogique. Pour modifier la fenêtre on prévoit des moyens de calcul qui modifient le contenu de chaque case de la table d'équivalence en fonction des valeurs des deux paramètres caractérisant la fenêtre. On associe donc aux moyens de calcul un moyen de réglage, tel qu'un potentiomètre, pour chaque paramètre.

Mais l'actionnement de deux commandes constitue une contrainte souvent considérée comme gênante par les utilisateurs.

L'invention remédie à cet inconvénient.

Elle permet, sous certaines conditions, de ne disposer que d'un seul organe de commande pour le réglage de la fenêtre.

Elle résulte de la constatation suivante : le plus souvent les appareils de radiographie numérique sont destinés à l'observation d'images de mêmes natures ou mêmes catégories. Par exemple un appareil de radiographie utilisé pour l'observation des vaisseaux sanguins (angiographie) n'a habituellement pas d'autre usage.

L'invention est caractérisée en ce que les deux paramètres définissant la fenêtre sont liés par une relation prédéterminée qui est fonction de la nature de l'image à observer. Ainsi il suffit d'agir sur un seul des paramètres pour obtenir un réglage satisfaisant (pour la vue de l'utilisateur) de la fenêtre.

D'autres caractéristiques et avantages de l'invention apparaîtront avec la description de certains de ses modes de réalisation, celle-ci étant effectuée en se référant aux dessins ci-annexés sur lesquels :

- la figure 1 est un schéma d'une installation d'imagerie numérique destinée à l'angiographie,
- la figure 2 est un diagramme expliquant l'opération de fenêtrage, et,
- les figures $3_a$ à $3_e$ sont d'autres diagrammes illustrant le système selon l'invention.

Dans une installation de radiologie numérique l'image radiographique est numérisée, c'est-à-dire que l'image est divisée en un certain nombre de points, ou zones, et à chacun de ces points on affecte une valeur numérique représentant une intensité de rayonnement, cette valeur étant le plus souvent un nombre binaire à dix chiffres. L'image numérisée est stockée dans une mémoire d'image 10 et les divers points sont lus en séquence par un balayage de type télévision, c'est-à-dire que sur la sortie 11 de cette mémoire 10 les valeurs numériques en chaque point apparaissent les unes après les autres. Ces valeurs sont transmises à l'entrée d'adressage 12 d'une mémoire vive 13 par l'intermédiaire d'un circuit d'interface 14.

La mémoire vive 13 constitue une table d'équivalence qui effectue l'opération de fenêtrage, les signaux apparaissant sur la sortie 15 de cette mémoire 13, our table d'équivalence des gris, étant appliqués à un moniteur de télévision 16 par l'intermédiaire d'une convertisseur analogique-numérique 17.

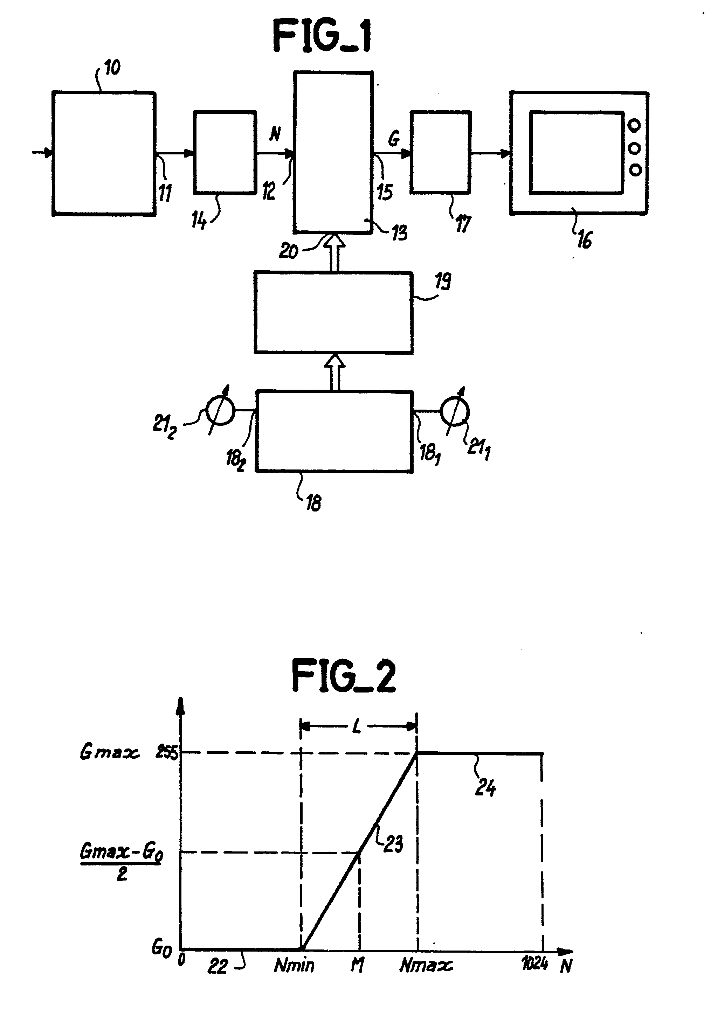

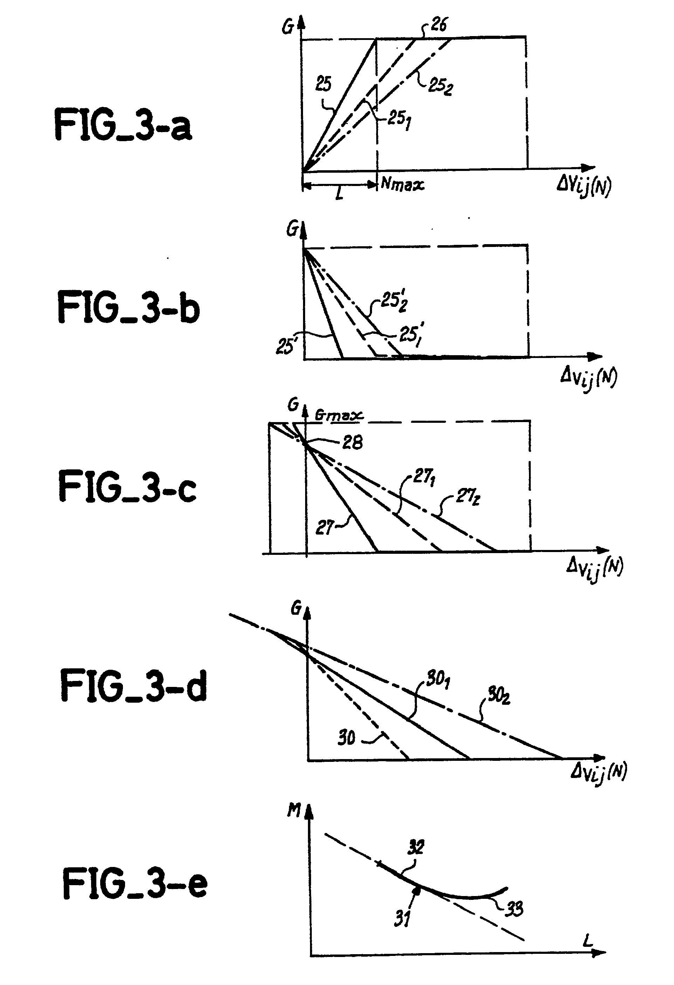

Le contenu de la mémoire 13 est modifiable grâce à des moyens de calcul 18 présentant deux entrées $18_1$, $18_2$ de réglage des paramètres de la fenêtre, ces moyens de calcul étant connectés, par l'intermédiaire d'un circuit interface 19, aux entrées de données 20 de la mémoire 13 pour changer le contenu de chaque case de cette mémoire. Autrement dit la valeur numérique de chaque case de la mémoire 13 est fonction du réglage de deux organes, tels que des potentiomètres $21_1$, $21_2$, fournissant des signaux sur les entrées, respectivement $18_1$ et $18_2$, du calculateur. Ces signaux représentent les deux paramètres définissant la fenêtre de gris comme on va le voir ci-après en relation avec la figure 2.

Sur le diagramme de la figure 2 on a porté en abscisses les valeurs numérisées N qui se trouvent dans la mémoire 10. Dans l'exemple ces valeurs sont comprises entre 0 et 1024. En ordonnées on a porté les valeurs G apparaissant sur la sortie 15 de la mémoire, ou table, 13. Ces valeurs dites de gris sont des nombres binaires compris entre $G_0 = 0$ et $G_{max} = 255$.

Le fenêtrage réalisé grâce à la mémoire 13 consiste à faire suivre au signal G sur la sortie 15 la loi représentée par les segments de droites 22, 23 et 24.

Le segment 22 est sur l'axe des abscisses entre les valeurs 0 et $N_{min}$. Le segment 24 est sur une droite parallèle à l'axe des abscisses d'ordonnée $G_{max}$ entre la valeur $N_{max}$ (supérieure à $N_{min}$) et la valeur maximale de N, c'est-à-dire 1024. Le segment 23 relie l'extrémité d'abscisse $N_{min}$ du segment 22 à l'extrémité d'abscisse $N_{max}$ du segment 24.

On voit que le fenêtrage consiste ainsi à considérer comme noires les luminances de valeurs inférieures à $N_{min}$ et comme blanches les luminances supérieures à $N_{max}$. On ne retient ainsi qu'une "fenêtre" des valeurs numériques de luminance dans l'image se trouvant dans la mémoire 10 ce qui amplifie cette fenêtre sur l'écran du moniteur 16. Un tel fenêtrage permet, surtout si la fenêtre est réglable, l'observation de détails qu'il ne serait en pratique pas possible d'observer si on reproduisait toute l'échelle des valeurs de l'image numérisée sur le moniteur.

On comprend aisément qu'une fenêtre peut être définie par deux paramètres, par exemple $N_{min}$ et $N_{max}$ ou encore la largeur $L = N_{max} - N_{min}$ et la valeur M du nombre N qui fournit un niveau de gris moyen soit

$$\frac{G_{max} - G_0}{2},$$

c'est-à-dire

$$\frac{G_{max}}{2}$$

dans l'exemple. Dans ce qui suit, pour les deux paramètres, on ne se référera qu'à la largeur L et au niveau moyen M.

L'organe $21_1$ permet le réglage de la largeur L tandis que l'organe $21_2$ assure le réglage du niveau moyen M.

On va maintenant décrire l'invention dans le cadre de l'angiographie numérique soustractive.

L'imagerie soustractive consiste à effectuer d'abord une première image de la zone du patient à observer (dans le cas présent des vaisseaux sanguins) avant l'injection d'un produit de contraste, puis à réaliser la même image après l'injection de produit de contraste dans le sang du patient, et enfin, soustraire en chaque point la valeur numérique obtenue avec le produit de contraste de la valeur numérique obtenue sans ce produit. On peut également effectuer le rapport entre ces deux valeurs.

En chaque point de l'image la valeur numérique est fonction de l'épaisseur traversée par les rayons X. De façon plus précise l'atténuation augmente avec la longueur traversée. Dans l'exemple le nombre N représente cette atténuation, plus exactement le logarithme $\Delta V_{ij}$ du rapport entre l'intensité de rayonnement en chaque point de l'image obtenue avec produit de contraste, et l'intensité du fond (sans produit de contraste).

Un vaisseau sanguin peut être assimilé à un cylindre. Les rayons X traversent ce vaisseau perpendiculairement à l'axe du cylindre. Les rayons tangents au cylindre ne fournissent aucune atténuation ; pour ces rayons on peut donc choisir la valeur N = 0. Par contre les rayons qui passent par l'axe du cylindre traversent une plus grande longueur et sont le plus fortement atténués; pour ces points le nombre binaire de l'image numérisée est $N_{max}$.

Des considérations précédentes il résulte que la largeur L de la fenêtre à utiliser est d'autant plus importante que le diamètre du vaisseau sanguin est important. En outre cette fenêtre présente un point fixe, par exemple l'origine sur l'axe des abscisses N.

Ainsi, lorsqu'on observe des vaisseaux sanguins de diamètres (ou sections) divers, il suffit de modifier la largeur L de la fenêtre en fonction du diamètre. Autrement dit un seul paramètre suffit à caractériser la fenêtre.

Sur la figure $3_a$, qui est un diagramme analogue à celui de la figure 2, les segments 25 et 26 représentent le fenêtrage pour un vaisseau de diamètre relativement peu important, tandis que les segments $25_1$ en traits interrompus et $25_2$ en traits mixtes correspondent au fenêtrage pour l'observation de vaisseaux sanguins de sections plus importantes, la fenêtre correspondant au segment $25_2$ se rapportant à des vaisseaux de section plus important que ceux observés grâce à la fenêtre représentée par le segment $25_1$. On voit sur cette figure $3_a$ que, pour caractériser le segment 25 (ou $25_1$, $25_2$), il suffit d'un seul paramètre, la largeur L ou la valeur $N_{max}$ ou encore la pente du segment 25. Le niveau moyen M est lié directement à ce paramètre. Il suffit donc d'agir sur un seul des moyens de réglage, par exemple celui de référence $21_1$, pour modifier la fenêtre.

La figure $3_a$ correspond à des vaisseaux clairs sur fond noir. Mais on préfère en général obtenir une image complémentaire, à savoir des vaisseaux foncés sur fond clair. Dans le cas de la figure $3_b$ le fond est blanc. Sur cette figure $3_b$ on a représenté, comme sur la figure $3_a$, des segments 25', $25'_1$ et

$25'_2$ qui correspondent à trois fenêtres de largeurs différentes.

Si on adopte le procédé que l'on vient de décrire en relation avec la figure $3_b$, le fond est saturé, ce qui peut être désagréable pour l'utilisateur; en outre la résolution de l'oeil est, dans ces conditions (fond saturé), relativement mauvaise pour l'observation des vaisseaux sanguins. C'est pourquoi il est préférable que le fond soit gris clair, non blanc. On peut adopter la transformation de N en G qui est représentée sur la figure $3_c$, c'est-à-dire que tous les segments 27, $27_1$, $27_2$ représentant la fenêtre passent tous par un point déterminé 28 de l'axe des ordonnées, l'ordonnée de ce point 28 étant inférieure à $G_{max}$.

Les études effectuées par l'inventeur ont montré qu'on pouvait encore améliorer le procédé de la figure $3_c$, c'est-à-dire qu'on pouvait fair varier la fenêtre d'une façon différente de celle représentée sur la figure $3_c$ pour obtenir une relation visuelle satisfaisante entre les vaisseaux et le fond gris clair. Par "relation visuelle satisfaisante" on entend ici un contraste suffisant entre les vaisseaux et le fond sans perte d'informations par troncature, c'est-à-dire pour que les vaisseaux de petit diamètre restent visibles.

Le meilleur résultat obtenu par l'expérience est une transformation du type de celle de la figure $3_d$ où les segments 30, $30_1$, $30_2$, etc... représentant les fenêtres ne passent pas tous par un point unique comme c'est le cas de la figure $3_c$. Cependant, comme déjà mentionné ci-dessus, la fenêtre est toujours définie par un seul paramètre, c'est-à-dire qu'il existe toujours une relation prédéterminée entre le niveau moyen M et la largeur L de la fenêtre. Cette relation prédéterminée, qui est établie de façon empirique est représentée par la courbe 31 sur la figure $3_e$ où l'on a porté en abscisses la largeur L et en ordonnées le niveau moyen M. Cette courbe 31 présente une partie 32 sensiblement rectiligne et une partie 33, vers les plus grandes valeurs de L, de forme incurvée vers le haut.

La courbe 31 est par exemple mise en mémoire dans le calculateur 18 lors de la construction de l'appareil.

Avec un tel appareil on peut ne prévoir qu'un seul organe de réglage $21_1$. Toutefois l'organe $21_2$ peut être conservé pour permettre, en vue d'autres applications, une modification du niveau moyen M.

## Revendications

1. Système d'imagerie numérique dans lequel à chaque point, ou zone, de l'image on affecte une valeur numérique et cette valeur est transformée (13) de façon telle que ne soit retenue qu'une gamme, ou fenêtre, de valeurs représentant des luminances pour un dispositif de visualisation (16), des moyens de commande ($21_1$, $21_2$) étant prévus pour modifier les deux paramètres caractérisant la fenêtre dans le dispositif (13) de transformation, caractérisé en ce que le système étant destiné à former des images d'une seule catégorie, par exemple des radiographies de vaisseaux sanguins, une relation prédéterminée est établie entre les deux paramètres caractéristiques de la fenêtre afin que cette dernière puisse être modifiée par actionnement d'un seul organe de réglage ($21_1$) tout en conservant une visibilité satisfaisante de l'image pour l'utilisateur.

2. Système selon la revendication 1, caractérisé en ce que la relation entre les deux paramètres caractéristiques de la fenêtre est déterminée de façon empirique.

3. Système selon la revendication 1 ou 2, caractérisé en ce que la relation (figure $3_e$) entre les deux paramètres caractérisant la fenêtre est linéaire au moins pour une gamme de valeurs de l'un des paramètres.

4. Système selon l'une quelconque des revendications précédentes, caractérisé en ce que le dispositif de transformation (13) comporte une mémoire vive recevant sur son entrée d'adressage (12) les valeurs numériques de l'image numérisée et dont l'entrée de données (20) est reliée à des moyens de calcul (18) en mémoire desquels est implantée la relation prédéterminée et présentant une entrée (18) recevant un signal représentatif d'un paramètre de la fenêtre.

5. Système selon l'une quelconque des revendications précédentes, caractérisé en ce que les paramètres de la fenêtre sont, d'une part, sa largeur (L) et, d'autre part, son niveau moyen (M).

6. Système selon l'une quelconque des revendications 1 à 4, caractérisé en ce que les paramètres représentatifs de la fenêtre sont le niveau minimum ($N_{min}$) et le niveau maximum ($N_{max}$).

7. Système selon l'une quelconque des revendications précédentes, destiné à la radiographie des vaisseaux sanguins, caractérisé en ce que le paramètre caractérisant la fenêtre est modifié en fonction de la section des vaisseaux sanguins.

8. Système selon la revendication 5, caractérisé en ce que la courbe représentant la relation prédéterminée entre la largeur et le niveau moyen de la fenêtre présente pour les plus faibles valeurs de la largeur, une partie rectiligne (32) et, pour les plus grandes valeurs, une partie (33) de forme incurvée vers le haut.

9. Application du système selon l'une quelconque des revendications précédentes à l'imagerie soustractive.

## Claims

1. A digital image producing system in which at each point, or zone, of the image a digital value is used and this value is transformed (13) in such a manner that only a scale, or window, of the value representing the luminance for a viewing device (16) is retained, control means ($21_1$ and $21_2$) being provided for modifying the two parameters characterizing the window in the transformation device (13), characterized in that the system is destined to form images of a single category, for instance radiographs of blood vessels, and a predetermined relationship is established between the two characteristic parameters of the window so that the latter may be modified by the action of a single regulating member ($21_1$)

while at the same time maintaining a satisfactory visibility of the image to be able to use it.

2. The system as claimed in claim 1 characterized in that the relationship between the two characteristic parameters of the window is determined in an empirical manner.

3. The system as claimed in claim 1 or claim 2 characterized in that at least for a scale of values of one of the parameters the relationship (figure $3_e$) between parameters characteristic of the window is linear.

4. The system as claimed in any one of the preceding claims characterized in that the transformation device (13) comprises a RAM receiving at its addressing input (12) the digital values of the digitalized image and the data input (20) thereof is connected with computing means (18) in whose memory the predetermined relationship is stored, same having an input (18) receiving a signal representative of a parameter of the window.

5. The system as claimed in any one of the preceding claims characterized in that the parameters of the window are, on the one hand, its width (L) and, on the other hand, its mean level (M).

6. The system as claimed in any one of the claims 1 through 4 characterized in that the parameters representative of the window are the minimum level ($N_{min}$) and the maximum level ($N_{max}$).

7. The system as claimed in any one of the preceding claims intended for the radiography of blood vessels, characterized in that the parameter characterizing the window is modified as a function of the section of the blood vessels.

8. The system as claimed in claim 5 characterized in that the curve representing the predetermined relationship between the width and the mean level of the window has, for the lowest values of the width, a rectilinear part (32) and, for the highest values, a part (33) which is upwardly curved.

9. The application of the system as claimed in any one of the preceding claims to subtractive image production.

**Patentansprüche**

1. Digitales Abbildungssystem, in dem jedem Bildpunkt oder jeder Bildzone ein digitaler Wert zugewiesen wird, der dann so umgewandelt (13) wird, daß nur ein Bereich oder Fenster von Helligkeitswerten für ein Sichtanzeigegerät (16) zurückbehalten wird, wobei Steuerungsmittel ($21_1$, $21_2$) vorgesehen sind, um die beiden das Fenster im Bildwandler (13) kennzeichnenden Parameter umzuändern, dadurch gekennzeichnet, daß das System dazu bestimmt ist, Bilder einer einzigen Kategorie zu bilden, zum Beispiel Röntgenaufnahmen von Blutgefäßen, und eine vorgegebene Beziehung zwischen den beiden das Fenster kennzeichnenden Parametern festgelegt ist, damit das Fenster durch Betätigung eines einzigen Stellglieds ($21_1$), bei gleichzeitiger Beibehaltung einer zufriedenstellenden Bildqualität für den Anwender, verändert werden kann.

2. System nach Anspruch 1, dadurch gekennzeichnet, daß die Beziehung zwischen den beiden das Fenster kennzeichnenden Parametern empirisch bestimmt wird.

3. System nach Anspruch 1 oder 2, dadurch gekennzeichnet, daß die Beziehung (Abbildung $3_e$) zwischen den beiden das Fenster kennzeichnenden Parametern mindestens für einen Wertbereich eines der Parameter linear ist.

4. System nach einem der vorausgehenden Ansprüche, dadurch gekennzeichnet, daß der Bildwandler (13) einen Arbeitsspeicher enthält, der an seinem Adresseneingang (12) die digitalen Werte des digitalisierten Bildes empfängt und dessen Dateneingang (20) mit Rechenmitteln (18) verbunden ist, in deren Speicher die vorgegebene Beziehung eingefügt ist und die einen Eingang (18) aufweisen, der ein für einen Fensterparameter repräsentatives Signal empfängt.

5. System nach einem der vorausgehenden Ansprüche, dadurch gekennzeichnet, daß die Parameter des Fensters einerseits seine Breite (L) und andererseits seine mittlere Höhe (M) sind.

6. System nach einem der Ansprüche 1 bis 4, dadurch gekennzeichnet, daß die für das Fenster repräsentativen Parameter die Minimalhöhe ($N_{min}$) und die Maximalhöhe ($N_{max}$) sind.

7. System nach einem der vorausgehenden Ansprüche, bestimmt zur Röntgenaufnahme der Blutgefässe, dadurch gekennzeichnet, daß der das Fenster kennzeichnende Parameter in Abhängigkeit vom Querschnitt der Blutgefäße abgeändert wird.

8. System nach Anspruch 5, dadurch gekennzeichnet, daß die Kurve, welche die vorgegebene Beziehung zwischen der Breite und der mittleren Höhe des Fensters darstellt, für die schwächsten Werte der Breite einen geradlinigen Teil (32) und für die größten Werte einen nach oben gebogenen Teil (33) aufweist.

9. Anwendung des Systems nach einem der vorausgehenden Ansprüche auf das substraktive Bildsystem.

# FIG_1

# FIG_2

FIG_3-a

FIG_3-b

FIG_3-c

FIG_3-d

FIG_3-e